# EUROPEAN PATENT SPECIFICATION

(11) **EP 2 904 765 B1**
(45) Date of publication and mention of the grant of the patent: **08.05.2019**
(21) Application number: 12886095.4
(22) Date of filing: 04.10.2012
(51) Int. Cl.: H04L 29/12

(54) **METHOD AND APPARATUS USING HIGH-EFFICIENCY ATOMIC OPERATIONS**
VERFAHREN UND VORRICHTUNG MIT HOCHEFFIZIENTEN ATOMISCHEN OPERATIONEN
PROCÉDÉ ET APPAREIL UTILISANT DES OPÉRATIONS ATOMIQUES À HAUTE EFFICACITÉ

(43) Date of publication of application: 12.08.2015
(73) Proprietor: Qualcomm Incorporated, San Diego, CA 92121-1714 (US)
(72) Inventor: TIAN, Zhixin, San Diego, California 92121-1714 (US); HE, Yunfeng, San Diego, California 92121-1714 (US)
(74) Representative: Wegner, Hans
(86) International application number: PCT/CN2012/082523
(87) International publication number: WO 2014/053074

(56) References cited:
- EP-A1- 2 037 635
- WO-A1-2004/038580
- WO-A2-2006/104804
- WO-A2-2006/119471
- WO-A2-2009/158229
- CN-A- 1 774 699
- CN-A- 102 025 528
- US-A1- 2004 221 246

## Description

### TECHNICAL FIELD

The present embodiments relate generally to data communications, and more particularly to methods and apparatus that provide flow control for buffering data.

### BACKGROUND OF RELATED ART

Atomic operations are often employed in multi-core processor architectures. Generally, an atomic operation is a set of operations that are combined so that they appear to the rest of the system as a single operation with only two possible outcomes: success or failure.

Two conventional methods of employing atomic operations include respective "lock" and "exclusive" schemes. The lock operation generally allows only one master to access a bus at a time. For multi-core applications that employ shared variables, the lock scheme may be inefficient since other masters need to wait until the active master is finished with the bus.

The exclusive scheme allows multiple masters to share the bus during operations. This is especially useful for semaphore variables that may be shared by multiple processing threads. Conventionally, the exclusive operation involves a first master performing a read access to a memory. A write access to the same location is then made by the same master. If the location address didn't change since the read access, the write access succeeds. A second master may initiate a read during the interval between the first masters' read and write cycle. In the event that a fail occurs, the second master polls the shared resource by sending requests until the resource is available. Once available, the request for exclusive accessto the resource is repeated.

While the exclusive scheme works well for its intended applications, repetitive polling to determine resource availability increases bus traffic and context switching, correspondingly reducing available signaling bandwidth along the bus and increasing system latency.

WO 2004/038580 discloses a method for, from a server, controlling transfers of jobs from clients to shared resources in the network. The method comprises that a request for sending a job to a shared resource selected by a client is received from the client and it is checked continuously whether the resource is available and has capacity by the moment for reception of jobs. A go-ahead is sent immediately to the client that the client can send the job to the resource if the resource is available and has capacity by the moment. The request is placed in a queue for the resource if the resource is available, but for the moment lacks capacity, the queue is updated continuously and a go-ahead is sent to the client that the client can send the job to the resource when the request has advanced to the first position in the queue and the resource has capacity.

US20040221246 discloses other related art.

### SUMMARY

The invention is as set out in the independent claims.

A method of controlling access between multiple master devices to a shared resource is disclosed. The method includes receiving a request to access the shared resource from a first master device, and determining availability of the shared resource. If the shared resource is available, a successful response is returned to the first master device to establish access by the first master device to the shared resource. If the shared resource is unavailable, a failed response is returned to the first master device. During the resource's unavailability, the shared resource is automatically monitored for when the shared resource becomes available. Once the shared resource becomes available, the first master device is automatically notified.

### BRIEF DESCRIPTION OF THE DRAWINGS

The present embodiments are illustrated by way of example and are not intended to be limited by the figures of the accompanying drawings, where:
FIG. 1 illustrates one embodiment of a multi-processor system;
FIG. 2 shows a high-level command and operation flow that implements an atomic operation using the system of FIG. 1;
FIG. 3 illustrates a flow chart that includes detailed steps corresponding to one embodiment of the command and operation flow of FIG. 2 from the perspective of a master device;
FIG. 4A illustrates a portion of a flow chart that includes detailed steps corresponding to one embodiment of a method corresponding to the command and operation flow of FIG. 2 from the perspective of a slave device; and
FIG. 4B illustrates a portion of a flow chart similar to FIG. 4A.

### DETAILED DESCRIPTION

In accordance with the present embodiments,a method of controlling access between multiple master devices to a shared resource is disclosed. The method includes receiving a request to access the shared resource from a first master device, and determining availability of the shared resource. If the shared resource is available, a successful response is returned to the first master device to establish exclusive access by the first master device to the shared resource. If the shared resource is unavailable, a failed response is returned to the first master device. During the resource's unavailability, the shared resource is automatically monitored for when the shared resource is available. Once available, the first master device is automatically notified. By providing automatic monitoring and notification, polling and related context switching from master devices may be significantly reduced, improving system performance.

In the following description, numerous specific details are set forth such as examples of specific components, circuits, and processes to provide a thorough understanding of the present disclosure. Also, in the following description and for purposes of explanation, specific nomenclature is set forth to provide a thorough understanding of the present embodiments. However, it will be apparent to one skilled in the art that these specific details may not be required to practice the present embodiments. In other instances, well-known circuits and devices are shown in block diagram form to avoid obscuring the present disclosure. The term "coupled" as used herein means connected directly to or connected through one or more intervening components or circuits. Any of the signals provided over various buses described herein may be time-multiplexed with other signals and provided over one or more common buses. Additionally, the interconnection between circuit elements or software blocks may be shown as buses or as single signal lines. Each of the buses may alternatively be a single signal line, and each of the single signal lines may alternatively be buses, and a single line or bus might represent any one or more of a myriad of physical or logical mechanisms for communication between components. The present embodiments are not to be construed as limited to specific examples described herein but rather to include within their scopes all embodiments defined by the appended claims.

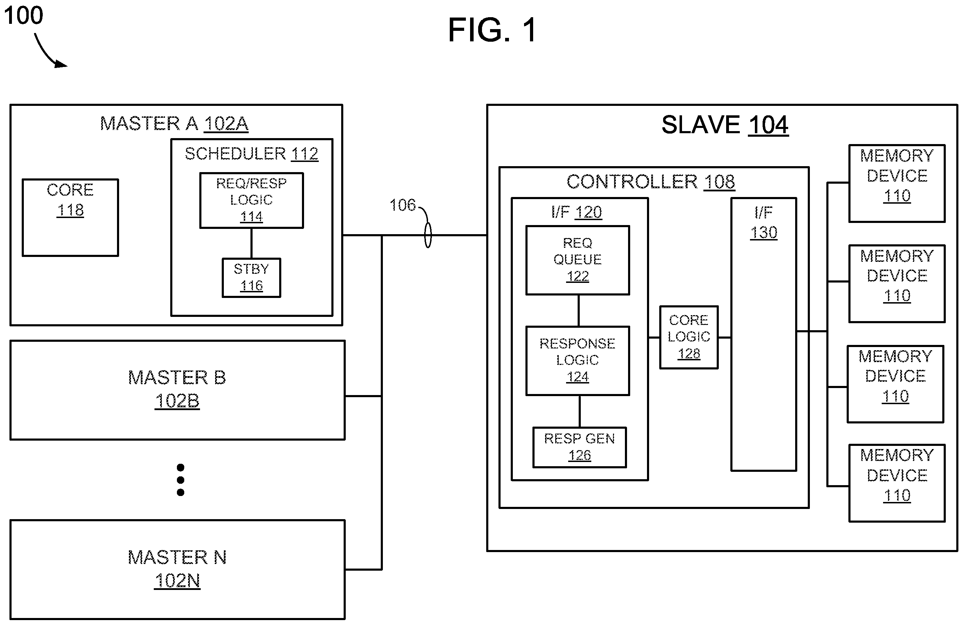

More specifically, and referring generally to FIG. 1, a multi-master signaling system 100 employs plural master devices 102A- 102N that interconnect to a slave device 104 via a shared bus 106. In one embodiment, the master devices 102A - 102N are embodied as integrated circuit processors that may be disposed on one or more integrated circuit chips. The slave device 104, in one embodiment, is embodied as a memory system that employs a memory controller 108 to arbitrate access to one or more memory devices 110. To allow for shared access to the memory while maintaining high utilization and efficiency, new schemes for semaphoretype and non-semaphore type atomic operations are supported, more fully described below.

Further referring to FIG. 1, each master device, such as device 102A, includes a scheduler 112 that employs request/response logic 114 and a standby queue 116. The request/response logic 114 generates and receives messages in the form of commands or requests/responses that are dispatched between the master device 102A and the slave device 104 to coordinate exclusive access for carrying out an operation. Core circuitry 118 in the master device 102A provides the computational resources for generating and or processing data that is written to or retrieved from the slave device 104 as a result of the exclusive access. The standby queue 116 temporarily stores commands and data for a given atomic transaction until exclusive access between the master and the slave can be secured.

With continued reference to FIG. 1, the slave device 104 includes a scheduling interface 120 that communicates with the multiple master devices 102A - 102N to coordinate exclusive transactions at varying times. The scheduling interface 120includes a request queue 122 such as a buffer for receiving and storing requests from the various master devices such as on a first-in-first-out basis. Response logic 124 couples to the request queue 122 to detect the availability of the slave device 104 for exclusive access. In one embodiment, the response logic 124 includes a counter that exhibits a first value (such as a 1) when the memory is available for access, and a second decremented value (such as a 0) when the memory system 104 is locked in an operation with one of the master devices. The controller 108 also includes a response generator 126to generate and send messages to the various master devices as more fully described below.

Further referring to FIG. 1, the scheduling interface 120 couples to core logic 128 that provides processing resources for tracking and handling the various operations that are in-process and/or queued for processing by the controller 108. As noted above, in one embodiment, the shared resource that is alternatingly exclusively accessed by each of the master devices is a memory. Consequently, a memory interface 130 is provided to carry out accesses between the controller 108 and the one or more memory devices 110. In some embodiments, the controller 108 and memory devices 110 are embodied as separate integrated circuit devices. In other embodiments, the controller functionality may be distributed and included as a circuit in each of the master devices 102A - 102N.

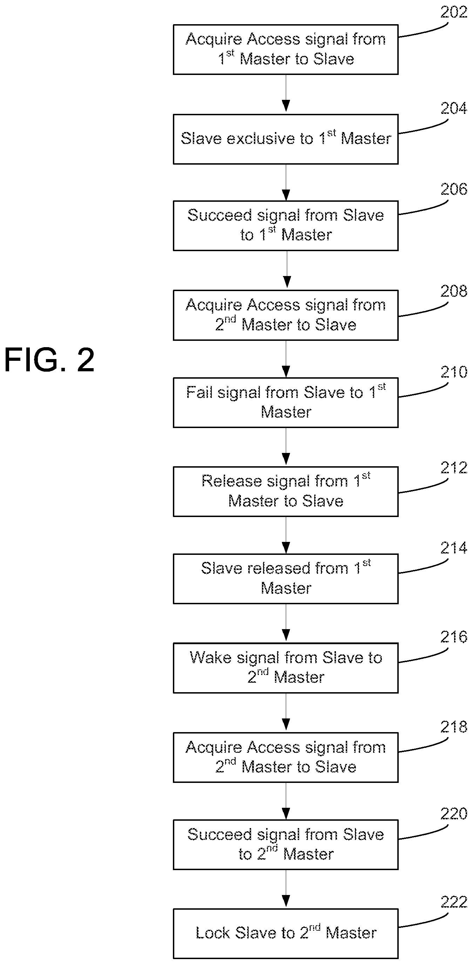

Figure 2 illustrates a flowchart showing a sequence of operations between multiple master devices and a shared slave device. Exclusive access to the shared resource is arbitrated through use of a semaphoretype atomic operation that involves a sequence of commands to carry out a single transaction. The atomic operations reduce polling from master devices not having exclusive access to the shared resource. As a result, the reduced polling and associated context switching improves the signaling bandwidth of the interconnect, thereby improving system performance.

Further referring to FIG. 2, and using a memory system context as one example, a first master device (such as a processor) desiring exclusive access to theshared slave device (such as memory) issues a first request "ACQUIRE ACCESS" to the slave device, at 202. If the slave device is available for an exclusive operation with another master device, at 204, a "SUCCEED" signal is issued from the slave device, at 206, to the first master device. This establishes a locked condition between the two devices for carrying out a series of read and/or write data transactions between the first master device and the slave device.

With continued reference to FIG. 2, should a second master device issue an exclusive access request to the slave device, at 208, while the first master has exclusive access, the locked condition with the first master device causes the slave to respond to the second master device with a "FAIL" response, at 210. The second master device then enters a standby mode of operation to perform the operation until the memory is available. Availability occurs when the first master device issues a "RELEASE" command, at 212. In response to the RELEASE command, the slave device is released from the first master device, at 214, and automatically generates and issues a "WAKE" command to the second master device (assuming the prior failed request is the highest priority operation in the slave device queue), at 216. Once the second master receives the WAKE command, a new ACQUIRE request is issued to establish a locked state with the slave device, at 218, with a corresponding SUCCEED command issued by the slave to confirm exclusivity, at 220.At this point, the slave device is locked to the second master device, at 222.

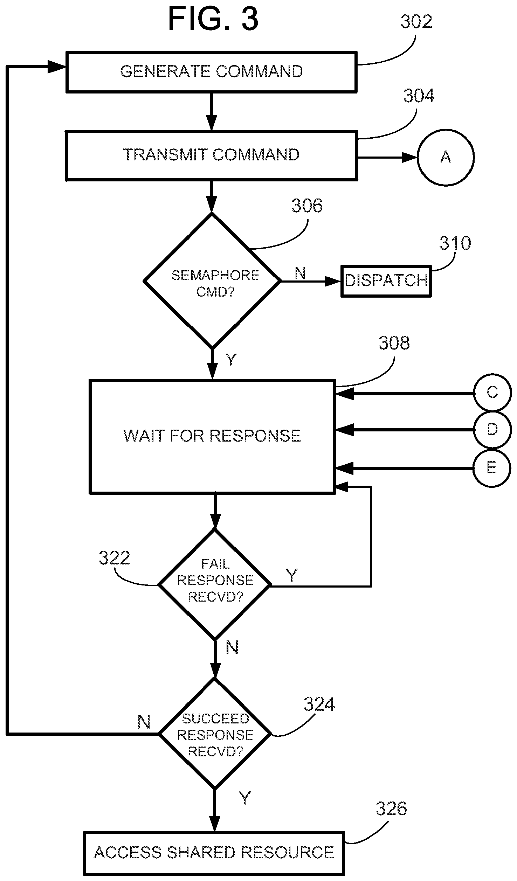

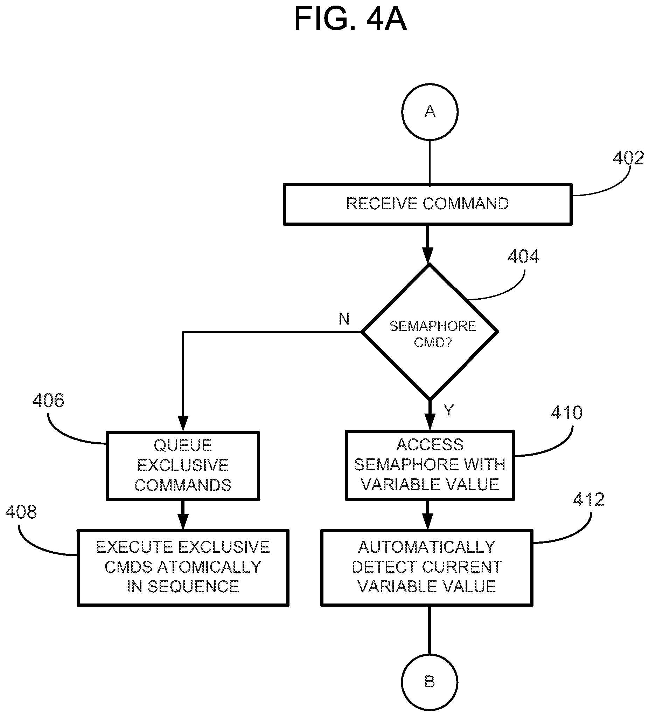

FIG. 3 illustrates one embodiment of method steps in further detail from the perspective of a master device that correspond to the method described above in FIG. 2 relating to semaphoretype atomic operations. When the master device needs to read data from (or write data to) the memory controlled by the slave device, it executes instructions to have the request/response logic 114 generate an "ACQUIRE" access command, at 302, and transmit the request to the slave device, at 304. The request transmission is represented by bubble "A", which transfers to FIG. 4A. If the command is a semaphoretype operation, determined at 306, then the master device waits for a response before taking further actions with the slave, at 308. If the command is a non-semaphore type of command, all other operations and operands are packetized with the command, and it is dispatched to the slave, at 310.

Referring now to FIG. 4A, the slave devicescheduling interface 120 receives the "ACQUIRE" command from the first master IC, at step 402 (via bubble A). A determination is then made, at 404, whether the request involves a semaphoretype operation. If not, then the slave queues the exclusive commands in the request queue 122, at 406, and executes the exclusive commands atomically in sequence, at 408. If the operation is a semaphoretype operation, then a variable value indicating the memory's availability is accessed, at 410, and the current value of the variable is detected, at 412.

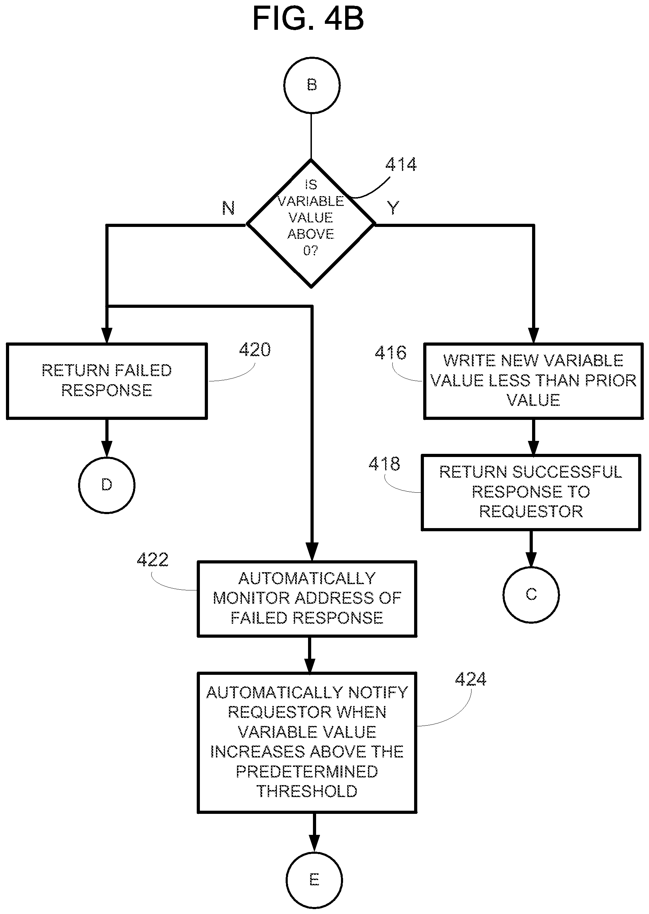

With reference to FIG. 4B, the detected value of the variable is evaluated by the response logic 124 (via bubble "B" joining FIGs 4A and 4B), at 414. In one embodiment, a value greater than "0" indicates availability of the resource, which results in writing a new variable value decremented from the previous value, at 416. A successful response is then returned to the first master IC, at 418, via bubble "C".

In the event that the variable value is not above the threshold, thus indicating that the resource is unavailable, a failed response is generated by the response generator 126 and returned to the requesting master, at 420, via bubble "D". The resource is automatically monitored by the response logic 124, at 422, and an automatic notification (response) sent to the requesting master, via bubble "E", when the variable value goes above the threshold, at 424.

Non-semaphore type atomic operations involve packetizing all of the operation information into one access. No automatic detection or notification mechanisms are applied.

Referring back to FIG. 3, for semaphoretype operations, the master device waits in a standby mode of operation where it evaluates received messages and determines whether a "FAIL" response was received, at 322, via bubbles C, D, or E. The standby mode is activated by the standby queue 116 (FIG. 1), which temporarily stores the original access request in a buffer until the master can gain access to the slave. When a non-FAIL response is returned (either a SUCCEED or a WAKE), and received by the request/response logic 114 (FIG. 1), a further determination is carried out, at 324, whether the received message was a SUCCEED. If so, the link between the master device and the slave device is locked, and a sequence of read and/or write operations occurs to carry out the atomic transaction, at 326. If a SUCCEED response was not received, then a "WAKE" response is assumed, and the master device generates a subsequent "ACQUIRE" command at 302 for dispatch to the slave device to initiate a lock condition, which is confirmed through receipt of a subsequent "SUCCEED" response via the steps described above.

The proposed schemes thus provide atomic operations that minimize the number of accesses and reduce polling operations to determine availability. This correspondingly decreases the overhead involved with accessing the bus and associated context switching activities.

In the foregoing specification, the present embodiments have been described with reference to specific exemplary embodiments thereof. It will, however, be evident that various modifications and changes may be made thereto without departing from the broader scope of the disclosure as set forth in the appended claims. The specification and drawings are, accordingly, to be regarded in an illustrative sense rather than a restrictive sense.

## Claims

1. A method of controlling access between multiple master devices (102A-102N) to a shared resource (110) comprised by a slave device (104), the method being carried out at the slave device (104), and the method comprising:
receiving (402) a request to access the shared resource (110) from a first master device (102A-102N);
determining (414) availability of the shared resource (110);
if the shared resource (110) is available, returning (418) a successful response to the first master device (102A-102N) to establish access by the first master device (102A-102N) to the shared resource (110); and
if the shared resource (110) is unavailable:
returning (420) a failed response to the first master device (102A-102N);
automatically monitoring (422) for when the shared resource (110) becomes available; and
automatically notifying (424) the first master device (102A-102N) when the shared resource (110) becomes available.

2. The method of claim 1, wherein determining (414) availability comprises:
identifying a variable having a value that represents whether the shared resource is available for access; and
detecting a current value for the variable.

3. The method of claim 2, wherein automatically monitoring (422) comprises: detecting when the variable value reaches a predetermined threshold value.

4. The method of claim 2, wherein the variable comprises a semaphore variable.

5. The method of claim 1 and further comprising:
receiving a request for access to the shared resource (110) from each of a plurality of master devices (102A-102N); and
queuing the requests.

6. A method of controlling access between multiple master devices (102A-102N) to a shared resource (110) comprised by a slave device (104), the method being carried out at a master device (102A-102N), and the method comprising:
generating (302) a command requesting exclusive access to the shared resource (110) for carrying out an operation;
transmitting (304) the command to the slave device (104);
receiving (322) a failed response from the slave device (104);
entering a standby mode with respect to the operation; and
maintaining the standby mode until receipt of a wake response from the shared resource of the slave device (104).

7. A master device (102A-102N) comprising:
request logic (114) adapted to generate a command requesting exclusive access to a shared resource (110) of a slave device (104) for carrying out an operation, the shared resource (110) shared by multiple master devices (102A-102N), and to transmit the command to the slave device (104); and
standby logic (116) responsive to a fail response signal from the shared resource (110) adapted to:
enter a standby mode with respect to the operation, and
maintain the standby mode until receipt of a wake response from the shared resource (110).

8. The device of claim 7, and further comprising:
an interface for coupling to a signaling bus (106), the signaling bus (106) also coupled to the multiple master devices (102A-102A) and the shared resource (110).

9. The device of claim 7, wherein the standby logic (116) is responsive to receipt of the wake response by re-requesting exclusive access to the shared resource (110) of the slave device (104).

10. A slave device (104) comprising:
an interface (120) for arbitrating a transaction between a shared resource (110) of the slave device (104) and a master device (102A-102N);
a monitor adapted to receive an incoming request for access to the shared resource (110) from the master device (102A-102N);
arbitration logic (128) for determining availability of the shared resource (110); and
response logic (124) adapted to generate signals indicating success or failure of a given master device (102A-102N) to gain access to the shared resource (110) of the slave device (104);
a response generator (126) adapted to:
if the shared resource (110) is available, return a successful response to the master device (102A-102N) to establish access by the first master device (102A-102N) to the shared resource (110); and
if the shared resource (110) is unavailable, return a failed response to the master device (102A-102N), wherein the slave device is further adapted to automatically monitor for when the shared resource (110) becomes available and to automatically notify the master device (102A-102N) when the shared resource (110) becomes available.

11. The device of claim 10, wherein the monitor is adapted to receive incoming requests for access to the shared resource (110) from multiple master devices (102A-102N).

12. The device of claim 11, wherein the monitor comprises a request queue (122).

13. The device of claim 12, and further comprising logic adapted to order the incoming requests in the request queue.

14. The device of claim 10 wherein the arbitration logic (128) comprises a counter circuit that is adapted to generate a value indicating whether the shared resource (110) is available for access.

15. A system (100) comprising:
a plurality of master devices (102A-102N) according to any of claims 7-9;
a bus (106) coupled to the plurality of master devices (102A-102N); and
a slave device (104) according to any of claims 10-14 coupled to the bus (106).

## Patentansprüche

1. Verfahren zum Steuern des Zugriffs zwischen mehreren Master-Vorrichtungen (102A-102N) auf eine gemeinsame Ressource (110), die von einer Slave-Vorrichtung (104) umfasst wird, wobei das Verfahren an der Slave-Vorrichtung (104) ausgeführt wird und das Verfahren umfasst:
Empfangen (402) einer Anforderung zum Zugriff auf die gemeinsame Ressource (110) von einer ersten Master-Vorrichtung (102A-102N);
Bestimmen (414) der Verfügbarkeit der gemeinsamen Ressource (110);
wenn die gemeinsame Ressource (110) verfügbar ist, Rückgabe (418) einer erfolgreichen Antwort an die erste Master-Vorrichtung (102A-102N), um den Zugriff der ersten Master-Vorrichtung (102A-102N) auf die gemeinsame Ressource (110) herzustellen; und
wenn die gemeinsame Ressource (110) nicht verfügbar ist:
Zurückgeben (420) einer fehlerhaften Antwort an die erste Master-Vorrichtung (102A-102N);
automatisches Überwachen (422), wann die gemeinsame Ressource (110) verfügbar wird; und
automatisches Benachrichtigen (424) der ersten Master-Vorrichtung (102A-102N), wenn die gemeinsame Ressource (110) verfügbar wird.

2. Verfahren nach Anspruch 1, wobei das Bestimmen (414) der Verfügbarkeit umfasst:
Identifizieren einer Variablen mit einem Wert, der angibt, ob die gemeinsame Ressource für Zugriff verfügbar ist; und
Erfassen eines derzeitigen Wertes für die Variable.

3. Verfahren nach Anspruch 2, wobei das automatische Überwachen (422) umfasst:
Erfassen, wenn der Variablenwert einen vorbestimmten Schwellenwert erreicht.

4. Verfahren nach Anspruch 2, wobei die Variable eine Semaphorenvariable umfasst.

5. Verfahren nach Anspruch 1 und ferner umfassend:
Empfangen einer Anforderung zum Zugriff auf die gemeinsame Ressource (110) von jeder aus einer Vielzahl von Master-Vorrichtungen (102A-102N); und
Bilden einer Warteschlange für die Anforderungen.

6. Verfahren zum Steuern des Zugriffs zwischen mehreren Master-Vorrichtungen (102A-102N) auf eine gemeinsame Ressource (110), die von einer Slave-Vorrichtung (104) umfasst wird, wobei das Verfahren an einer Master-Vorrichtung (102A-102N) ausgeführt wird und das Verfahren umfasst:
Erzeugen (302) eines Befehls, der den exklusiven Zugriff auf die gemeinsame Ressource (110) zum Ausführen einer Operation anfordert;
Übertragen (304) des Befehls an die Slave-Vorrichtung (104);
Empfangen (322) einer fehlerhaften Antwort von der Slave-Vorrichtung (104);
Eintritt in einen Standby-Modus in Bezug auf die Operation; und
Aufrechterhalten des Standby-Modus bis zum Empfang einer Weckantwort von der gemeinsamen Ressource der Slave-Vorrichtung (104).

7. Master-Vorrichtung (102A-102N), umfassend:
Anforderungslogik (114), die angepasst ist, um einen Befehl zu erzeugen, der exklusiven Zugriff auf eine gemeinsame Ressource (110) einer Slave-Vorrichtung (104) zum Ausführen einer Operation anfordert, wobei die gemeinsame Ressource (110) von mehreren Master-Vorrichtungen (102A-102N) gemeinsam genutzt wird, und um den Befehl an die Slave-Vorrichtung (104) zu übertragen; und
Standby-Logik (116), die auf ein Fehlerantwortsignal von der gemeinsamen Ressource (110) reagiert, die angepasst ist um:
in einen Standby-Modus in Bezug auf die Operation einzutreten, und
den Standby-Modus bis zum Empfang einer Weckantwort von der gemeinsamen Ressource (110) beizubehalten.

8. Vorrichtung nach Anspruch 7, und ferner umfassend:
eine Schnittstelle zum Koppeln an einen Signalisierungsbus (106), wobei der Signalisierungsbus (106) auch an die mehreren Master-Vorrichtungen (102A-102A) und die gemeinsame Ressource (110) gekoppelt ist.

9. Vorrichtung nach Anspruch 7, wobei die Standby-Logik (116) auf den Empfang der Weckantwort reagiert, indem sie exklusiven Zugriff auf die gemeinsame Ressource (110) der Slave-Vorrichtung (104) erneut anfordert.

10. Slave-Vorrichtung (104), umfassend:
eine Schnittstelle (120) zum Arbitrieren einer Transaktion zwischen einer gemeinsamen Ressource (110) der Slave-Vorrichtung (104) und einer Master-Vorrichtung (102A-102N);
einen Monitor, der angepasst ist, um eine eingehende Anforderung zum Zugriff auf die gemeinsame Ressource (110) von der Mastervorrichtung (102A-102N) zu empfangen;
Arbitrierungslogik (128) zum Bestimmen der Verfügbarkeit der gemeinsamen Ressource (110); und
Antwortlogik (124), die angepasst ist, um Signale zu erzeugen, die Erfolg oder Misserfolg einer gegebenen Master-Vorrichtung (102A-102N) anzeigen, Zugang zu der gemeinsamen Ressource (110) der Slave-Vorrichtung (104) zu erhalten;
einen Antwortgenerator (126), der angepasst ist um:
wenn die gemeinsame Ressource (110) verfügbar ist, eine erfolgreiche Antwort an die Master-Vorrichtung (102A-102N) zurückzugeben, um den Zugriff der ersten Master-Vorrichtung (102A-102N) auf die gemeinsame Ressource (110) herzustellen; und
wenn die gemeinsame Ressource (110) nicht verfügbar ist, eine fehlgeschlagene Antwort an die Master-Vorrichtung (102A-102N) zurückzugeben, wobei die Slave-Vorrichtung ferner angepasst ist, um automatisch zu überwachen, wann die gemeinsame Ressource (110) verfügbar wird, und um die Master-Vorrichtung (102A-102N) automatisch zu benachrichtigen, wenn die gemeinsame Ressource (110) verfügbar wird.

11. Vorrichtung nach Anspruch 10, wobei der Monitor angepasst ist, um eingehende Anforderungen zum Zugriff auf die gemeinsame Ressource (110) von mehreren Master-Vorrichtungen (102A-102N) zu empfangen.

12. Vorrichtung nach Anspruch 11, wobei der Monitor eine Anforderungswarteschlange (122) umfasst.

13. Vorrichtung nach Anspruch 12, und ferner umfassend eine Logik, die angepasst ist, um die eingehenden Anforderungen in der Anforderungswarteschlange zu ordnen.

14. Vorrichtung nach Anspruch 10, wobei die Arbitrierungslogik (128) eine Zählerschaltung umfasst, die angepasst ist, einen Wert zu erzeugen, der anzeigt, ob die gemeinsame Ressource (110) für den Zugriff verfügbar ist.

15. System (100), umfassend:
eine Vielzahl von Master-Vorrichtungen (102A-102N) nach einem der Ansprüche 7-9;
einen Bus (106), der mit der Vielzahl von Master-Vorrichtungen (102A-102N) gekoppelt ist; und
eine Slave-Vorrichtung (104) nach einem der Ansprüche 10-14, die mit dem Bus (106) gekoppelt ist.

## Revendications

1. Procédé de commande d'accès entre dispositifs maitres multiples (102A-102N) à une ressource partagée (110) formée d'un dispositif esclave (104), le procédé étant mis en oeuvre au niveau du dispositif esclave (104), et le procédé comprenant :
la réception (402) d'une requête d'accès à la ressource partagée (110) en provenance d'un premier dispositif maitre (102A-102N) ;
la détermination (414) d'une disponibilité de la ressource partagée (110) ;
si la ressource partagée (110) est disponible, le renvoi (418) d'une réponse de succès au premier dispositif maitre (102A-102N) pour établir un accès par le premier dispositif maitre (102A-102N) à la ressource partagée (110) ; et
si la ressource partagée (110) est indisponible :
le renvoi (420) d'une réponse d'échec au premier dispositif maitre (102A-102N) ;
la surveillance automatique (422) du moment où la ressource partagée (110) devient disponible ; et
la notification automatique (424) au premier dispositif maitre (102A-102N) du moment où la ressource partagée (110) devient disponible.

2. Procédé selon la revendication 1, dans lequel la détermination (414) d'une disponibilité comprend :
l'identification d'une variable ayant une valeur qui représente si la ressource partagée est disponible à l'accès ; et
la détection d'une valeur courante de la variable.

3. Procédé selon la revendication 2, dans lequel la surveillance automatique (422) comprend :
la détection du moment où la valeur de variable atteint une valeur de seuil prédéterminée.

4. Procédé selon la revendication 2, dans lequel la variable comprend une variable de sémaphore.

5. Procédé selon la revendication 1 et comprenant en outre :
la réception d'une requête d'accès à la ressource partagée (110) en provenance de chacun d'une pluralité de dispositifs maitres (102A-102N) ; et
la mise en file d'attente des requêtes.

6. Procédé de commande d'accès entre dispositifs maitres multiples (102A-102N) à une ressource partagée (110) formée d'un dispositif esclave (104), le procédé étant exécuté au niveau d'un dispositif maitre (102A-102N), et le procédé comprenant :
la génération (302) d'une commande requérant un accès exclusif à la ressource partagée (110) pour l'exécution d'une opération ;
la transmission (304) de la commande au dispositif esclave (104) ;
la réception (322) d'une réponse d'échec en provenance du dispositif esclave (104) ;
le passage dans un mode de veille par rapport à l'opération ; et
le maintien du mode de veille jusqu'à réception d'une réponse de réveil en provenance de la ressource partagée du dispositif esclave (104).

7. Dispositif maitre (102A-102N) comprenant :
une logique de requête (114) apte à générer une commande requérant un accès exclusif à une ressource partagée (110) d'un dispositif esclave (104) pour l'exécution d'une opération, la ressource partagée (110) étant partagée par des dispositifs maitres multiples (102A-102N), et à transmettre la commande au dispositif esclave (104) ; et
une logique de veille (116) répondant à un signal de réponse d'échec provenant de la ressource partagée (110) et apte à :
passer dans un mode de veille par rapport à l'opération, et
maintenir le mode de veille jusqu'à la réception d'une réponse de réveil en provenance de la ressource partagée (110) .

8. Dispositif selon la revendication 7, comprenant en outre :
une interface pour le couplage à un bus de signalisation (106), le bus de signalisation (106) étant également couplé aux multiples dispositifs maitres (102A-102N) et à la ressource partagée (110).

9. Dispositif selon la revendication 7, dans lequel la logique de veille (116) répond à la réception de la réponse de réveil en requérant à nouveau un accès exclusif à la ressource partagée (110) du dispositif esclave (104).

10. Dispositif esclave (104) comprenant :
une interface (120) pour arbitrer une transaction entre une ressource partagée (110) du dispositif esclave (104) et un dispositif maitre (102A-102N) ;
un moniteur apte à recevoir une requête entrante d'accès à la ressource partagée (110) en provenance du dispositif maitre (102A-102N) ;
une logique d'arbitrage (128) pour déterminer une disponibilité de la ressource partagée (110) ; et
une logique de réponse (124) apte à générer des signaux indiquant un succès ou un échec d'un dispositif maitre donné (102A-102N) pour obtenir un accès à la ressource partagée (110) du dispositif esclave (104) ;
un générateur de réponse (126) apte à :
si la ressource partagée (110) est disponible, renvoyer une réponse de succès au dispositif maitre (102A-102N) pour établir un accès par le premier dispositif maitre (102A-102N) à la ressource partagée (110) ; et
si la ressource partagée (110) est indisponible, renvoyer une réponse d'échec au dispositif maitre (102A-102N), lequel le dispositif esclave étant en outre apte à surveiller de manière automatique le moment où la ressource partagée (110) devient disponible et pour notifier de manière automatique au dispositif maitre (102A-102N) le moment où la ressource partagée (110) devient disponible.

11. Dispositif selon la revendication 10, dans lequel le moniteur est apte à recevoir des requêtes entrantes d'accès à la ressource partagée (110) en provenance de dispositifs maitres multiples (102A-102N).

12. Dispositif selon la revendication 11, dans lequel le moniteur comprend une file d'attente de requêtes (122).

13. Dispositif selon la revendication 12, et comprenant en outre une logique apte à ordonner les requêtes entrantes dans la file d'attente de requêtes.

14. Dispositif selon la revendication 10, dans lequel la logique d'arbitrage (128) comprend un circuit de comptage qui est apte à générer une valeur indiquant si la ressource partagée (110) est disponible à l'accès.

15. Système (100) comprenant :
une pluralité de dispositifs maitres (102A-102N) selon l'une des revendications 7 à 9 ;
un bus (106) couplé à la pluralité de dispositifs maitres (102A-102N) ; et
un dispositif esclave (104) selon l'une des revendications 10 à 14, couplé au bus (106).
